(19) **Europäisches Patentamt**
**European Patent Office**
**Office européen des brevets**

(11) **EP 1 903 240 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(21) Anmeldenummer: **07116871.0**

(22) Anmeldetag: **20.09.2007**

(51) Int Cl.:
***F16D 48/06*** *(2006.01)*

(54) **Verfahren zur Ermittlung des Befülldruckes für eine Kupplung**

Method for determining the filling pressure for a clutch

Procédé de détermination de pression de remplissage pour un embrayage

(84) Benannte Vertragsstaaten:
**DE FR GB**

(30) Priorität: **25.09.2006 DE 102006045573**

(43) Veröffentlichungstag der Anmeldung:
**26.03.2008 Patentblatt 2008/13**

(73) Patentinhaber: **Getrag Ford Transmissions GmbH
50735 Köln (DE)**

(72) Erfinder: **Henning, Manfred
40667 Meerbusch (DE)**

(56) Entgegenhaltungen:
**EP-A2- 0 742 389    US-A1- 2006 148 614**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung eines Befülldruckes für eine Kupplung, die Kupplungsbeläge, eine Kupplungsöffnungsfeder und ein hydraulisches Drucksystem aufweist, um die Kupplung gegen die Kraft der Kupplungsöffnungsfeder zu schließen, wobei in einem Greifpunkt der Kupplung die Kupplungsbeläge in Anlage sind und eine Erhöhung des Drucks im Drucksystem unmittelbar eine Bereitstellung einer Drehmomentkapazität der Kupplung bewirken würde.

Üblicherweise umfasst das Drucksystem einen Kupplungszylinder und einen Kupplungskolben die mit einer Eingangsseite oder einer Ausgangsseite der Kupplung fest verbunden sind und mit dieser rotieren. Im Greifpunkt der Kupplung heben sich die Kraft des Kupplungskolben auf die Kupplungsbeläge und die Kraft der Kupplungsöffnungsfeder gerade auf, so dass zwar sich die Kupplungsbeläge in Anlage befinden, jedoch ohne oder ohne wesentliche Anpresskraft aneinander anliegen.

Im Fahrzeugbau werden vermehrt Kupplungen wie beispielsweise Kupplungen in Doppelkupplungsgetrieben verwendet, die durch ein Steuergerät automatisch angesteuert werden. Bei einer derartigen Ansteuerung ist die genaue Kenntnis des Greifpunktes von entscheidender Bedeutung für die Qualität der Kupplungsbetätigung.

Um ausgehend von einer vollständig geöffneten Kupplung diesen Greifpunkt zu erhalten, muss der Kupplungszylinder mit einer Hydraulikflüssigkeit gefüllt werden. Damit dieser Befüllvorgang abläuft, kann der Befülldruck auf einen hohen Wert gesetzt werden. Durch den hohen Befülldruck lässt sich im Drucksystem ein großer Volumenstrom einstellen, so dass der Kupplungszylinder schnell befüllt wird und der Greifpunkt, ausgehend von der geöffneten Kupplung, in kurzer Zeit erreicht wird. Jedoch besteht dabei die Gefahr, dass durch den hohen Befülldruck beim Befüllen des Kupplungszylinders der Kupplungskolben letztlich eine Kraft auf die Kupplungsbeläge ausübt, die größer als die entgegengesetzte Kraft der Kupplungsöffnungsfeder ist, was dazu führt, dass die Kupplungsbeläge zwar in Anlage sind, jedoch aneinandergepresst werden, wodurch die Kupplung bereits eine Drehmomentkapazität aufweist. Dies ist jedoch für eine Steuerung der Kupplung, die beispielsweise in einem Kraftfahrzeug eingesetzt wird, dem Fahrkomfort abträglich.

Wird hingegen ein vergleichsweise kleiner Befülldruck eingestellt, kann die Befüllung des Kupplungszylinders und somit das Erreichen des Greifpunktes zuviel Zeit in Anspruch nehmen, was sich in einem Kraftfahrzeug beim Schalten ebenfalls in Komforteinbußen niederschlägt.

Der Erfindung liegt daher die Aufgabe zugrunde, ein Verfahren zur Ermittlung eines Befülldruckes für eine Kupplung bereitzustellen, durch den sich die Kupplung ausgehend von der geöffneten Stellung bis zum Greifpunkt schnell schließen lässt, ohne dass dabei eine nennenswerte Drehmomentkapazität bereitgestellt wird.

Die der Erfindung zugrunde liegende Aufgabe wird mit dem Verfahren gemäß Anspruch 1 gelöst. Bevorzugte Ausführungsbeispiele können den Unteransprüchen entnommen werden.

Bei dem Verfahren gemäß Anspruch 1 wird zunächst in einem Schritt A das Drucksystem mit einem Befüll-Solldruck $p_{BSoll}$ beaufschlagt, der ein Schätzwert oder ein Ergebniswert einer bereits früher durchgeführten Ermittlung, die nun verifiziert werden soll. Während der Beaufschlagung des Drucksystems mit dem Befüllsolldruck $p_{BSoll}$ wird in einem Schritt B ein Istdruck $p_{Ist}$ im Drucksystem ermittelt. Die Beaufschlagung des Drucksystems mit dem Befülldruck $p_{BSoll}$ endet, wenn der Istdruck $p_{Ist}$ in einem Zeitpunkt $t_1$ eine Druckabschaltschwelle $P_{Aus}$ erreicht hat (Schritt C). Der Zeitpunkt $t_1$ ist dabei kein vorgegebener Zeitpunkt, sondern hängt von dem zeitlichen Verlauf des Istdrucks $p_{Ist}$ bzw. der gewählten Höhe der Druckabschaltschwelle $p_{Aus}$ ab.

Nachdem der Istdruck $p_{Ist}$ die Druckabschaltschwelle $p_{Aus}$ erreicht hat, wird das Drucksystem nun mit einem Anlage-Solldruck $p_{ASoll}$ beaufschlagt. Der Anlage-Solldruck $p_{ASoll}$ entspricht dabei dem Druck im Drucksystem, bei dem das Drucksystem die Kraft der Kupplungsöffnungsfeder gerade aufhebt, wenn sich die Kupplungsbeläge in Anlage befinden. Durch den Anlage-Solldruck $p_{ASoll}$ lässt sich somit der Greifpunkt der Kupplung einstellen (vgl. Schritt D). Es folgt nun in einem Schritt E die Ermittlung einer Kennzahl K, die anzeigt, ob nach dem Zeitpunkt $t_1$ zwischen einen Zeitpunkt $t_3$ und einem Zeitpunkt $t_4$ der Istdruck $p_{Ist}$ oberhalb oder unterhalb des Anlage-Solldrucks $p_{ASoll}$ liegt. Die Schritte A bis E bilden einen Zyklus, der erfindungsgemäß mehrmals durchlaufen wird, wobei der Befüll-Solldruck $p_{BSoll}$ bei jeder Wiederholung um ein Inkrement $\Delta p$ geändert wird, bis eine Abbruchbedingung erfüllt ist. Die Wahl der Höhe des Inkrements $\Delta p$, die Änderung des Befüll-Solldrucks $p_{BSoll}$ (Erhöhung, Reduzierung) werden dabei von Zyklus zu Zyklus so festgelegt, dass sich der Befüll-Solldruck $p_{BSoll}$ einem "optimalen" Befüll-Solldruck annähert, durch den sich eine schnelle Befüllung des Kupplungszylinders realisieren lässt, ohne dass die Kupplung über den Greifpunkt hinaus geschlossen wird. Ist die Abbruchbedingung des Verfahrens erfüllt, so wird der Befüll-Solldruck $p_{BSoll}$ des letzten Zyklus abgespeichert und kann zur Steuerung des Betriebs der Kupplung genutzt werden.

In einem bevorzugten Ausführungsbeispiel entspricht die Kennzahl K dem Integral der Differenz aus dem Istdruck $p_{Ist}$ und dem Anlage-Solldruck $p_{ASoll}$ zwischen den Zeitpunkten $t_3$ und $t_4$. Das Verwenden eines Integrals für die Kennzahl K hat u.a. den Vorteil, dass ein mögliches Signalrauschen weitgehend ausgefiltert wird. Damit entscheiden nicht einzelne Signalspitzen über einen zu großen oder zu kleinen Befüll-Solldruck. Die Kennzahl K berechnet sich demnach nach folgender Gleichung:

$$K = \int_{t_3}^{t_4} (p_{Ist} - p_{ASoll}) \cdot dt$$

Der Befüll-Solldruck $p_{BSoll}$ kann für einen nächsten Zyklus um das Inkrement $\Delta p$ erhöht werden, wenn die Kenngröße K kleiner Null ist. In diesem Fall ist zwischen den Zeitpunkten $t_3$ und $t_4$ im Mittel der Istdruck $p_{Ist}$ kleiner als der eingestellte Anlage-Solldruck $p_{ASoll}$. Als Grund hierfür ist zu nennen, dass die Kupplungsbeläge noch nicht in Anlage sind und der Kupplungskolben noch bewegt werden muss, was zu einem Volumenstrom im Drucksystem führt. Durch Strömungsverluste im Drucksystem ist dabei der Istdruck $p_{Ist}$ kleiner als der vorgegebene Anlage-Solldruck $p_{ASoll}$.

Der Befüll-Solldruck $p_{BSoll}$ kann für den nächsten Zyklus um das Inkrement $\Delta p$ reduziert werden, wenn die Kenngrößer K größer Null ist. In diesem Fall ist zwischen den Zeitpunkten $t_3$ und $t_4$ im Mittel der Istdruck $p_{Ist}$ größer als der Anlage-Solldruck $p_{ASoll}$, was darauf hindeutet, dass der gewählte Befüll-Solldruck $p_{BSoll}$ zu hoch eingestellt ist.

In einem bevorzugten Ausführungsbeispiel wird zumindest zwischen zwei aufeinander folgenden Zyklen das Inkrement $\Delta p$ reduziert. Dabei kann eine Reduzierung erfolgen, wenn sich das Vorzeichen der Kenngröße K zwischen zwei Zyklen geändert hat. Der entsprechende Vorzeichenwechsel ist ein Indiz dafür, dass in einem der beiden Zyklen der dort gewählte Befüll-Solldruck $p_{BSoll}$ zu groß und in dem anderen der beiden Zyklen der dort gewählte Befüll-Solldruck $p_{BSoll}$ zu klein ist oder umgekehrt. Mit anderen Worten: Der zu ermittelnde "optimale" Befüll-Solldruck $p_{BSoll}$ liegt zwischen den Befüll-Solldrücken der beiden Zyklen. Durch eine Reduzierung des Inkrements $\Delta p$ lässt sich der durch die Befüll-Solldrücke der beiden Zyklen aufgespannte Bereich näher untersuchen, um sich dem "optimalen" Befüll-Solldruck schrittweise anzunähern.

Eine mögliche Abbruchbedingung kann darin gesehen werden, wenn das Inkrement $\Delta p$ eine Nichtigkeitsschwelle $\Delta p_{Grenz}$ unterschreitet. Eine andere oder ergänzende Abbruchbedingung kann dann erfüllt sein, wenn die Kenngröße K betraglich kleiner als ein Nichtigkeitswert $K_{Grenz}$ ist. Im Idealfall ist die Kenngröße K gleich Null, was bedeutet, dass nach der Befüllung mit dem Befüll-Solldruck $p_{BSoll}$ weder ein Nachbefüllen aufgrund Nichtanlage der Reibungsbeläge noch ein Druckabbau im Drucksystem stattfindet.

Vorzugsweise wird eine Druckdifferenz $p_{Diff}$ zwischen der Druckabschaltschwelle $p_{Ab}$ und dem Befüll-Solldruck $p_{BSoll}$ eingestellt, die zwischen 300 und 700 mbar liegt. Gute Ergebnisse lassen sich erzielen, wenn die Druckabschaltschwelle $p_{Ab}$ ca. 500 mbar unterhalb des Befüll-Solldrucks $p_{BSoll}$ liegt. Die Druckdifferenz $p_{Diff}$ kann in der Anwendung konstant gehalten werden, so dass sich die Ermittlung einer optimalen Erfüllung nur auf eine Größe, den Befüll-Solldruck $p_{BSoll}$ beschränkt. In einem Kennfeld über Drehzahl und/oder Temperatur kann die Druckdifferenz $p_{Diff}$ abgelegt sein und zur Ermittlung des Befüll-Solldruck $p_{BSoll}$ aus dem Kennfeld herausgelesen werden.

Ein Startwert für den Befüll-Solldruck im erfindungsgemäßen Verfahren liegt vorzugsweise ca. 400 bis 1.000 mbar oberhalb des Anlage-Solldrucks $p_{ASoll}$. Daraus resultieren Werte für die Druckabschaltschwelle $p_{Ab}$, die ca. 500 mbar über dem Anlage-Solldruck $p_{ASoll}$ liegen.

Bei der Beaufschlagung des Drucksystems mit dem Befüll-Solldruck $p_{BSoll}$ sollte zweckmäßig von einem Druck $p_0$ ausgegangen werden, bei dem die Kupplung sicher geöffnet ist. Dies bedeutet, dass der Druck $p_0$ kleiner sein sollte als der Anlage-Solldruck $p_{ASoll}$. Die Erhöhung von dem Druck $p_0$ auf den Befüll-Solldruck $p_{BSoll}$ erfolgt dabei in einem Zeitpunkt $t_0$.

Mit dem erfindungsgemäßen Verfahren lassen sich gute Ergebnisse erzielen, wenn eine Zeitdifferenz $\Delta t_{3,4}$ zwischen den Zeitpunkten $t_3$ und $t_4$ ca. 30 ms beträgt. Dies ist eine ausreichend große Zeitdifferenz, um einzelne Signalspitzen bei der Integralbildung zwischen den Zeitpunkten $t_3$ und $t_4$ ausreichend zu glätten.

Zwischen der sprunghaften Reduzierung von dem Befüll-Solldruck $p_{BSoll}$ auf den Anlage-Solldruck $p_{ASoll}$ im Zeitpunkt $t_1$ können zweckmäßigerweise bis zu dem Zeitpunkt $t_3$ 20 bis 30 ms eingeplant werden, um eine Einregelung des Drucksystems aufgrund des erfolgten Solldrucksprungs abzuwarten.

Das Drucksystem kann ein elektrisch ansteuerbares Steuerventil umfassen, das den Druck im Drucksystem erzeugt. Dieses Steuerventil stellt abhängig von einem eingeprägten elektrischen Steuerstrom einen hydraulischen Druck im Drucksystem bereit. Zur Verbesserung der Druckregelgüte kann das Drucksystem des weiteren einen überlagerten Druckregler umfassen, der den elektrischen Steuerstrom für das Steuerventil korrigiert.

Bei der Beaufschlagung des Drucksystems mit dem Befüll-Solldruck $p_{BSoll}$ im erfindungsgemäßen Verfahren wird beim überlagerten Druckregler vorzugsweise ein PD-Verhalten (Proportional-Differential-Verhalten) eingestellt. In einem bevorzugten Ausführungsbeispiel wird im Zeitpunkt $t_1$, also in dem Zeitpunkt, in dem der Befüll-Solldruck $p_{BSoll}$ auf den Anlage-Solldruck $p_{ASoll}$ reduziert wird, der überlagerte Druckregler ausgeschaltet, bis das Drucksystem eingeschwungen ist. Beispielsweise bleibt dann der überlagerte Druckregler so lange ausgeschaltet, bis ein elektrischer Strom-Istwert eines unterlagerten Stromreglers des Steuerventils den Sollwert erreicht bzw. unterschreitet oder bis der Istdruck $p_{Ist}$ den Anlage-Solldruck $p_{ASoll}$ erreicht bzw. unterschreitet, je nachdem, was zuerst eintritt. In einem Zeitpunkt $t_2$ wird dann der überlagerte Druckregler eingeschaltet, wobei dann vorzugsweise ein PID-Verhalten (Proportional-Integral-Differential-Verhalten) eingestellt wird.

Anhand der in der Zeichnung dargestellten Ausführungsbeispiele soll die Erfindung näher erläutert werden. Es zeigen:

Figur 1    eine stark schematisierte Darstellung einer Kupplung mit hydraulischem Drucksystem und Kupplungsöffnungsfeder;

Figur 2    diverse Druckverläufe in einem Zyklus gemäß eines Ausführungsbeispiels der Erfindung;

Figur 3    ein Ablaufdiagramm für ein bevorzugtes Ausführungsbeispiel der Erfindung; und

Figur 4    beispielhaft den Verlauf von Befüll-Solldrücken mehrerer Zyklen.

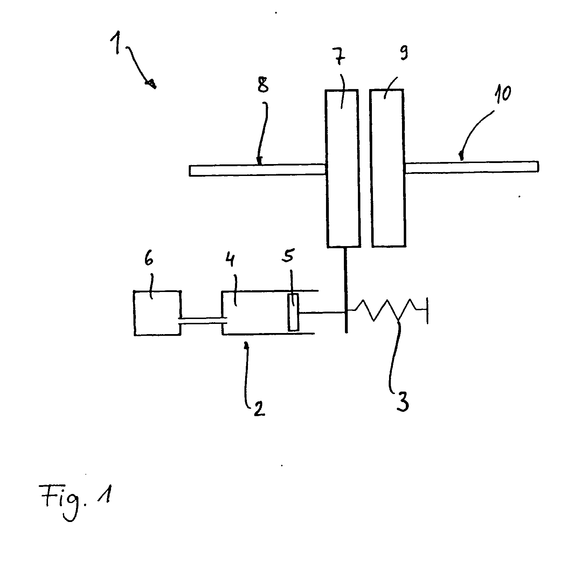

In Figur 1 ist in stark schematisierter Form eine Kupplung 1 dargestellt, die ein hydraulisches Drucksystem 2 und eine Kupplungsöffnungsfeder 3 aufweist. Das Drucksystem 2 umfasst dabei einen Kupplungszylinder 4 und einen Kupplungskolben 5. Der Druck im Kupplungszylinder 4 bzw. am Kupplungskolben 5 lässt sich durch ein Steuerventil 6 einstellen.

Durch das Drucksystem 2 lässt sich ein Kupplungsbelag 7 einer Ausgangsseite 8 der Kupplung 1 gegen einen Kupplungsbelag 9 einer Ausgangsseite 10 der Kupplung 1 drücken, so dass aufgrund der Reibkräfte zwischen den Kupplungsbelägen 7, 9 die Kupplung 1 ein Drehmoment zwischen Eingangsseite 8 und Ausgangsseite 10 übertragen kann. Der Kupplungszylinder 4 und der Kupplungskolben 5 sind mit der Eingangsseite 8 verbunden, so dass diese mit der Eingangsseite 8 rotieren.

Liegt am Kupplungskolben 5 kein hydraulischer Druck an, werden aufgrund der Kupplungsöffnungsfeder 3 die beiden Kupplungsbeläge 7, 9 auseinander gedrückt, so dass die Kupplung 1 geöffnet ist und kein Drehmoment übertragen kann. In dem Kupplungszylinder 4 kann nun ein Druck eingestellt werden, bei dem die Kupplungsbeläge 7, 9 zur Anlage kommen, jedoch die Anpresskraft zwischen den Kupplungsbelägen 7, 9 gleich Null bzw. im wesentlichen gleich Null ist. In diesem Fall entspricht die auf den Kupplungskolben 5 wirkende Kraft aufgrund der Druckbeaufschlagung im Kupplungszylinder 4 der Kraft der zusammengedrückten Kupplungsöffnungsfeder 3. Eine weitere Druckerhöhung im Kupplungszylinder 4 würde unmittelbar zu einer Anpressung der Kupplungsbeläge 7, 9 führen, wodurch die Kupplung Drehmomente übertragen könnte. Der Druck im Kupplungszylinder 4, bei dem die Kraft auf den Kupplungskolben 5 der Federkraft der zusammengedrückten Kupplungsöffnungsfeder 3 entspricht, wenn die Kupplungsbeläge 7, 9 in Anlage sind, entspricht einem Anlagedruck der Kupplung 1 (auch "stroke pressure" genannt), der sich durch Beaufschlagung eines Soll-Anlagedrucks $p_{ASoll}$ im geregelten Drucksystem 2 einstellt.

Wird der Kupplungskolben 5 mit dem Soll-Anlagedruck $p_{ASoll}$ beaufschlagt, befindet sich Kupplung 1 in ihrem Greifpunkt, in dem gerade noch kein Drehmoment durch die Kupplung 1 übertragen werden kann. Beispielsweise kann Kupplung 1 Teil eines Doppelkupplungsgetriebes mit zwei Nasskupplungen sein, das in einem Kraftfahrzeug eingebaut ist. Für kurze Gangwechselzeiten sollte die Befüllzeit der Kupplung 1 bzw. der anderen Kupplung des Doppelkupplungsgetriebes möglichst gering zu halten. Unter Befüllzeit soll die Zeit verstanden werden, die benötigt wird, eine Kupplung aus einer geöffneten Stellung bis zu dem Greifpunkt zu schließen.

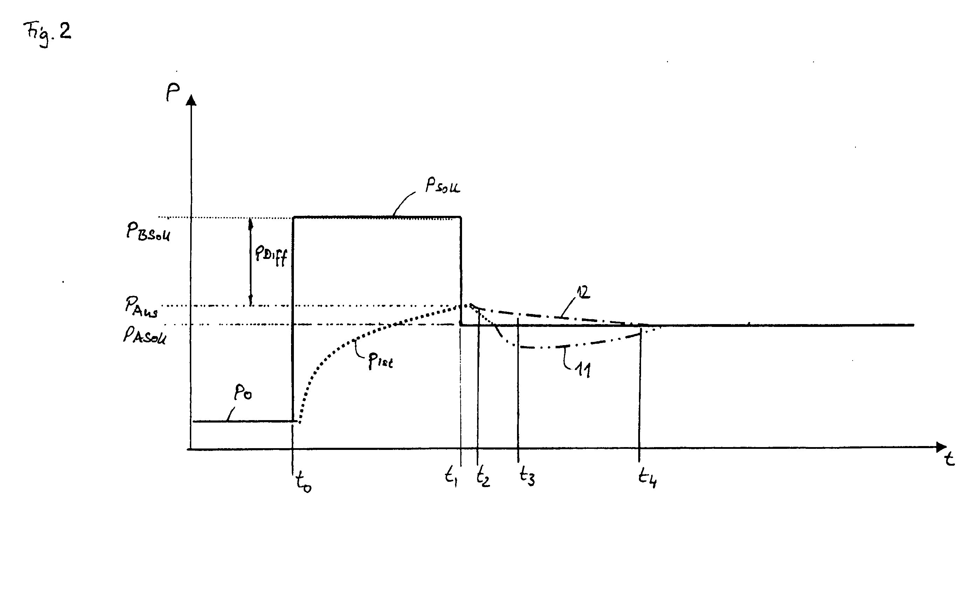

Zur Ermittlung eines Befüll-Solldruckes $p_{BSoll}$, mit denen sich kurze Befüllzeiten realisieren lassen, wird gemäß der Erfindung ein Zyklus mehrmals durchlaufen, für den in einem Ausführungsbeispiel in Figur 2 ein Verlauf des Solldrucks $p_{Soll}$ (durchgezogene Linie) und mögliche Verläufe eines Istdrucks $p_{Ist}$ (punktierte bzw. strichpunktierte Linien) dargestellt sind. Während des Zyklus wird das Drucksystem 2 mit dem dargestellten Solldruck $p_{Soll}$ beaufschlagt. Aufgrund der hydraulischen Charakteristik des Drucksystems 2 bzw. der gesamten Kupplung 1 stellt sich als Reaktion auf die Beaufschlagung des Solldrucks der Istdruck $p_{Ist}$ ein, der mehr oder weniger von dem Solldruck abweicht.

Zunächst wird das Drucksystem 2 mit einem Druck $p_0$ beaufschlagt, der unterhalb des Anlage-Solldrucks $p_{ASoll}$ liegt. Dadurch wird sichergestellt, dass die Kupplung 1 zu Beginn des Zyklus geöffnet ist. In einem Zeitpunkt $t_0$ wird der Solldruck auf einen Befüll-Solldruck $p_{BSoll}$ erhöht. Handelt es sich im erfindungsgemäßen Verfahren um den ersten Zyklus, der durchlaufen wird, so muss für den Befüll-Solldruck $p_{BSoll}$ ein Startwert vorgegeben werden, der beispielsweise 1.000 mbar oberhalb des bekannten Anlage-Solldrucks $p_{ASoll}$ liegen kann. Die Beaufschlagung des Drucksystems 2 mit dem Befüll-Solldruck $p_{BSoll}$ dauert so lange an, bis der gemessene Istdruck $p_{Ist}$ eine Druckabschaltschwelle $p_{Aus}$ erreicht. Die Druckabschaltschwelle $p_{Aus}$ muss ebenfalls vorgegeben sein und ist vorzugsweise eine Funktion des Befüll-Solldrucks $p_{BSoll}$. Beispielsweise kann die Druckabschaltschwelle zu dem Befüll-Solldruck $p_{BSoll}$ eine konstante Druckdifferenz $p_{Diff}$ aufweisen, beispielsweise 500 mbar.

Hat der Istdruck $p_{Ist}$ die Druckabschaltschwelle $p_{Aus}$ erreicht (siehe Zeitpunkt $t_1$), wird der Solldruck $p_{Soll}$ auf den Anlage-Solldruck $p_{ASoll}$ reduziert. Nach wenigen Millisekunden wird in einem Zeitpunkt $t_2$ ein PID-Regler eingeschaltet, der dem Steuerventil 6 überlagert ist und zur Verbesserung der Druckregelgüte einen elektrischen Steuerstrom für das Steuerventil korrigiert. Nach einer gewissen Einregelzeit wird in einem Zeitpunkt $t_3$ ein Integrator gestartet, der das Integral der Differenz des Istdruckes $p_{ist}$ zum Anlagesolldruck $p_{ASoll}$ bestimmt. Das Integral wird dabei von dem Zeitpunkt $t_3$ bis zu einem Zeitpunkt $t_4$ gebildet.

Ist beispielsweise in dem Zyklus der Befüll-Solldruck zu klein gewählt worden, so erreicht der Istdruck

$p_{Ist}$ die Druckabschaltschwelle $p_{Aus}$, bevor die Kupplungsbeläge 7, 9 der Kupplung 1 zur Anlage kommen. Nach Erreichen der Druckabschaltwelle $p_{Aus}$ bei dann vorgegebenen Anlage-Solldruck $p_A$ stellt sich im Drucksystem 2 ein Istdruck $p_{Ist}$ ein, der unterhalb des Anlage-Solldrucks $p_{ASoll}$ liegt (siehe Bezugszeichen 11). Grund dafür ist ein Volumenstrom im Drucksystem 2 mit damit einhergehenden Strömungsverlusten, der notwendig ist, den Kupplungskolben 5 zu bewegen, bis die Kupplungsbeläge zur Anlage kommen.

Entspricht dem Integral einer Kennzahl K, so wie sie in Anspruch 2 definiert ist, ergibt sich aus einem zu kleinen Befüll-Solldruck $p_{BSoll}$ eine Kennzahl K mit negativem Vorzeichen. Um nun den "optimalen" Befüll-Solldruck $p_{BSoll}$ iterativ zu ermitteln, muss in einem nächsten Zyklus der Befüll-Solldruck $p_{BSoll}$ um ein bestimmtes Inkrement $\Delta p$ erhöht werden.

Ist hingegen der gewählte Befüll-Solldruck $p_{BSoll}$ zu groß, muss nach dem Zeitpunkt $t_1$ der Istdruck $p_{Ist}$ ausgehend von der Druckabschaltschwelle $p_{Aus}$ auf den Anlage-Solldruck $p_{ASoll}$ herunter geregelt werden. In diesem Fall hat die Befüllung dazu geführt, dass die Kupplungsbeläge 7, 9 in Anlage sind und aufgrund des Istdrucks $p_{Ist}$, der größer ist als der Anlage-Solldruck $p_{ASoll}$, aneinandergedrückt werden. Dies bedeutet, dass die Kupplung 1 über ihren Greifpunkt hinaus geschlossen worden ist. Ein zu hoher Druckverlauf des Istdrucks $p_{Ist}$ ist durch das Bezugszeichen 12 dargestellt. Aufgrund der Regelung des Drucksystems nähert sich der Istdruck $p_{Ist}$ dem vorgegebenen Anlage-Solldruck $p_{ASoll}$ an. Die Kennzahl K bzw. das Integral der Differenz aus Istdruck $p_{Ist}$ und Anlage-Solldruck $p_{ASoll}$ ist dabei positiv. Dies würde bedeuten, dass in einem nächsten Zyklus der Befüll-Solldruck $p_{BSoll}$ um das Inkrement $\Delta p$ reduziert werden sollte.

Durch mehrmaliges Durchlaufen des in Figur 2 dargestellten Zyklus bei jeweils unterschiedlichem Befüll-Solldruck $p_{BSoll}$ und der Ermittlung der Kennzahl K, durch die vorgegeben wird, ob in dem nächsten Zyklus der Befüll-Solldruck $p_{BSoll}$ um das Inkrement $\Delta p$ erhöht oder erniedrigt wird, wird der "richtige" oder "optimale" Befüll-Solldruck $p_{BSoll}$ in einem iterativen Näherungsverfahren ermittelt.

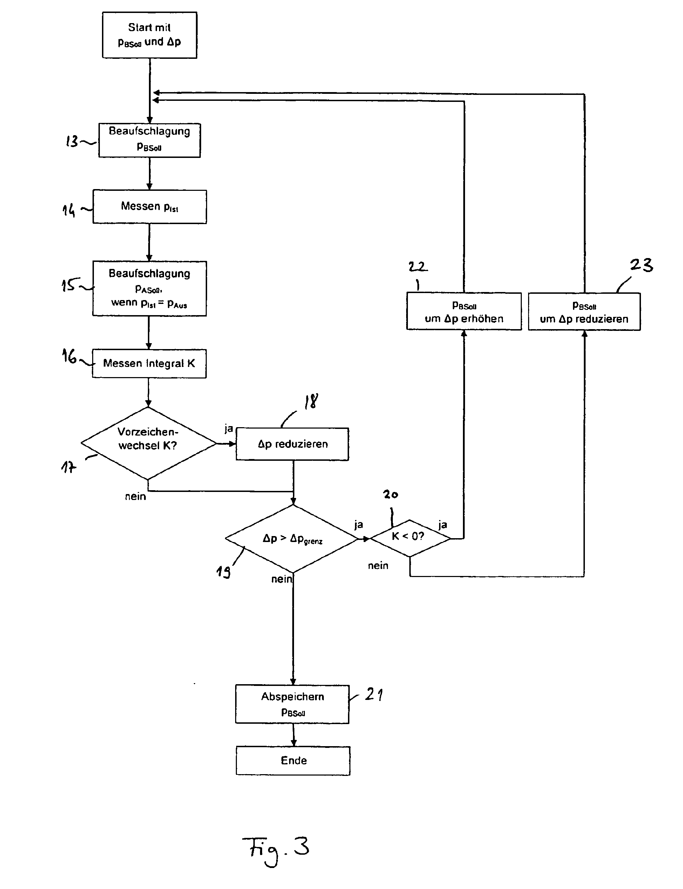

Figur 3 zeigt ein Ablaufdiagramm für ein Ausführungsbeispiel der Erfindung. Die Bezugszeichen 13, 14, 15, 16 bezeichnen Prozesse oder Vorgänge, wie sie anhand des Zyklus der Figur 2 bereits beschrieben worden sind. Nach bzw. während der Beaufschlagung mit dem Befüll-Solldruck $p_{BSoll}$ (Prozess 13) wird der Istdruck $p_{ist}$ im Drucksystem 2 gemessen (Prozess 14). Das Drucksystem 2 wird mit dem Anlage-Solldruck $p_{ASoll}$ beaufschlagt, wenn der Istdruck $p_{Ist}$ die Druckabschaltschwelle $p_{Aus}$ erreicht hat (Prozess 15). Nach einer gewissen Zeitverzögerung wird das Integral gemäß der Gleichung in Anspruch 2 für die Kennzahl K gebildet (Prozess 16).

In einer Abzweigung 17 erfolgt eine Abfrage, ob sich das Vorzeichen der Kennzahl K gegenüber dem Vorzeichen der Kennzahl K des vorhergehenden Zyklus geändert hat. Ist dies der Fall, wird in einem Prozess 18 das Inkrement $\Delta p$ reduziert, durch den der Befüll-Solldruck $p_{BSoll}$ von Zyklus zu Zyklus geändert wird. Auf den Prozess 18 folgen zwei Abzweigungen 19, 20. In der Abzweigung 20 wird abgefragt, ob das Inkrement $\Delta p$ größer ist als eine Nichtigkeitsschwelle $\Delta p_{Grenz}$. Ist dies nicht der Fall, (d.h. $\Delta p$ kleiner gleich $\Delta p_{Grenz}$), wird das Verfahren beendet, wobei der Befüll-Solldruck $p_{BSoll}$ des letzten Zyklus als "richtiger" Befüll-Solldruck abgespeichert wird (Prozess 21). Ist hingegen das Inkrement $\Delta p$ größer als die Nichtigkeitsschwelle $\Delta p_{Grenz}$, folgt die Abzweigung 20, in der abgefragt wird, ob die Kenngröße K kleiner Null ist. Ist dies der Fall, wird der Befüll-Solldruck $p_{BSoll}$ für den nächsten Zyklus um das Inkrement $\Delta p$ erhöht und der Zyklus mit den Prozessen 13 bis 16 erneut durchlaufen. Ist hingegen die Kennzahl K größer als Null, wird der Befüll-Solldruck $p_{BSoll}$ für den nächsten Zyklus um das Inkrement $\Delta p$ reduziert (siehe Prozesse 22, 23).

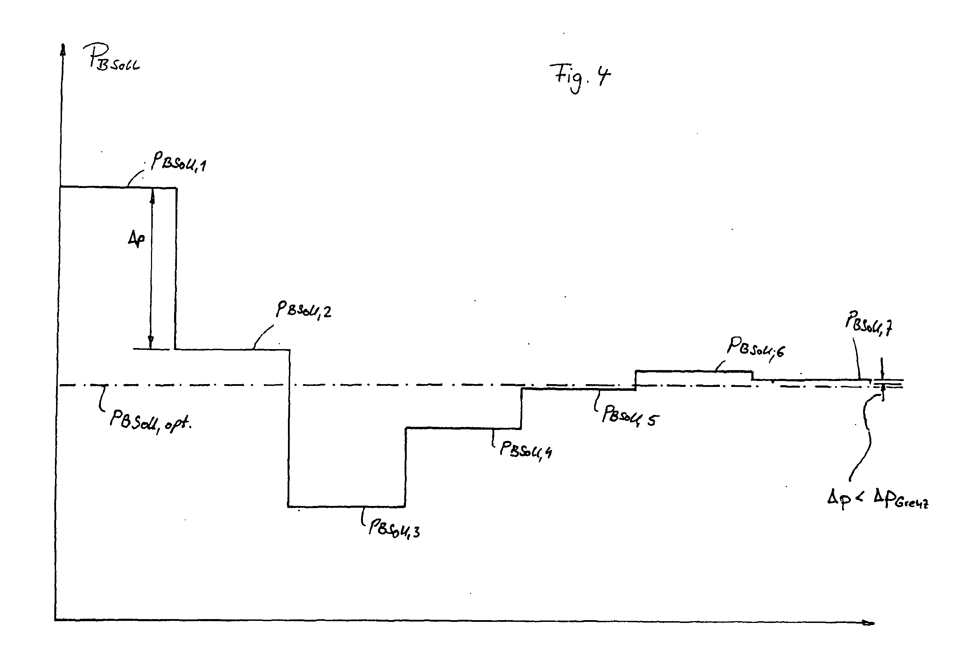

Figur 4 ist eine Folge von mehreren Befüll-Solldrucken $p_{BSoll,i}$ hintereinander geschalteter Zyklen. Im ersten Zyklus wird das Drucksystem 2 mit einem ersten Befüll-Solldruck $p_{BSoll,1}$ beaufschlagt. Dieser erste Befüll-Solldruck $p_{BSoll,1}$ liegt oberhalb des zu ermittelnden "optimalen" Befüll-Solldruck $p_{BSoll,opt.}$, der in der Figur 4 strichpunktiert dargestellt ist. Da der Befüll-Solldruck $p_{BSoll,1}$ des ersten Zyklus größer ist als der "optimale" Befüll-Solldruck $p_{BSoll,opt.}$, wird der Befüll-Solldruck $p_{BSoll}$ um $\Delta p$ reduziert, da nach Durchlauf des ersten Zyklus die Kennzahl K größer Null ist.

Da auch der Befüll-Solldruck $p_{BSoll,2}$ des zweiten Zyklus größer ist als der "optimale" Befüll-Solldruck $p_{BSoll,opt.}$ und somit die Kenngröße K größer Null ist, wird der Befüll-Solldruck weiter reduziert, und zwar auf $p_{BSoll,3}$. Aufgrund des Befüll-Solldruckes $p_{BSoll,3}$, der nun kleiner als der "optimale" Befüll-Solldruck $p_{BSoll,opt.}$ ist, ergibt sich für die entsprechende Kennzahl K in diesem Zyklus ein Wert kleiner gleich Null, da aufgrund des notwendigen Nachfüllens des Kupplungszylinders 4 der Istdruck im Drucksystem 2 geringer ist als der Anlage-Solldruck $p_{ASoll}$. Dies bedeutet zum einen ein Vorzeichenwechsel der Kennzahl K, wodurch nun von Zyklus zu Zyklus das Inkrement $\Delta p$ jeweils reduziert wird (hier jeweils halbiert wird). Zum anderen ist nun das Vorzeichen der Kennzahl K negativ, so dass nun für den vierten Zyklus der Befüll-Solldruck $p_{BSoll,4}$ gegenüber dem Befüll-Solldruck $p_{BSoll,3}$ des dritten Zyklus um das reduzierte Inkrement $\Delta p$ erhöht wird.

Wie der Figur 4 zu entnehmen ist, nähert sich der Befüll-Solldruck $p_{BSoll,i}$ dem "optimalen" Befüll-Solldruck $p_{BSoll,opt.}$ an, wobei sich das Inkrement $\Delta p$ ab dem dritten Zyklus von Zyklus zu Zyklus halbiert. Das Verfahren wird nach dem siebten Zyklus abgebrochen, da nun das Inkrement $\Delta p$ kleiner als die Nichtigkeitsschwelle $\Delta p_{Grenz}$ ist.

Bezugszeichenliste

| | |
|---|---|
| 1 | Kupplung |
| 2 | Drucksystem |
| 3 | Kupplungsöffnungsfeder |
| 4 | Kupplungszylinder |
| 5 | Kupplungskolben |
| 6 | Steuerventil |
| 7 | Kupplungsbelag |
| 8 | Eingangsseite |
| 9 | Kupplungsbelag |
| 10 | Ausgangsseite |
| 11 | Istdruck zu klein |
| 12 | Istdruck zu groß |
| 13 | Prozess |
| 14 | Prozess |
| 15 | Prozess |
| 16 | Prozess |
| 17 | Verzweigung |
| 18 | Prozess |
| 19 | Verzweigung |
| 20 | Verzweigung |
| 21 | Prozess |
| 22 | Prozess |
| 23 | Prozess |

**Patentansprüche**

1. Verfahren zur Ermittlung eines Befülldruckes für eine Kupplung (1), die Kupplungsbeläge (7, 9), eine Kupplungsöffnungsfeder (3) und ein hydraulisches Drucksystem (2) aufweist, um die Kupplung (1) gegen die Kraft der Kupplungsöffnungsfeder (3) zu schließen, wobei in einem Greifpunkt der Kupplung (1) die Kupplungsbeläge (7, 9) in Anlage sind und eine Erhöhung des Drucks im Drucksystems (2) unmittelbar eine Bereitstellung einer Drehmomentkapazität der Kupplung (1) bewirken würde, mit folgenden Schritten:

    A Beaufschlagung des Drucksystems (2) mit einem Befüll-Solldruck $p_{BSoll}$;
    B Ermittlung eines Istdrucks $p_{Ist}$ im Drucksystem (2);
    C Beendigung der Beaufschlagung des Drucksystems (2) mit dem Befülldruck $p_{BSoll}$, wenn der Istdruck $p_{Ist}$ in einem Zeitpunkt $t_1$ eine Druckabschaltschwelle $p_{Aus}$ erreicht hat;
    D Beaufschlagung des Drucksystems (2) mit einem Anlage-Solldruck $p_{ASoll}$, durch den sich der Greifpunkt der Kupplung (1) halten lässt;
    E Ermittlung einer Kennzahl K, die anzeigt, ob nach dem Zeitpunkt $t_1$ zwischen einem Zeitpunkt $t_3$ und einem Zeitpunkt $t_4$ der Istdruck $p_{Ist}$ oberhalb oder unterhalb des Anlage-Solldrucks

$p_{ASoll}$ liegt, und
    F Wiederholung eines Zyklus mit den Schritten A bis E, wobei der Befüll-Solldruck $p_{BSoll}$ bei jeder Wiederholung um ein Inkrement $\Delta p$ geändert wird, bis eine Abbruchbedingung erfüllt ist; und
    G Abspeichern des Befüll-Solldrucks $p_{BSoll}$ des letzten Zyklus.

2. Verfahren nach Anspruch 1, **dadurch gekennzeichnet, dass** die Kennzahl K dem Integral der Differenz aus dem Istdruck $P_{Ist}$ und dem Anlage-Solldruck $P_{ASoll}$ zwischen den Zeitpunkten $t_3$ und $t_4$ entspricht, gemäß folgender Gleichung:

$$K = \int_{t_3}^{t_4} (p_{Ist} - p_{ASoll}) \cdot dt \, .$$

3. Verfahren nach Anspruch 1 oder 2, **dadurch gekennzeichnet, dass** der Befüll-Solldruck $p_{BSoll}$ für den nächsten Zyklus um das Inkrement $\Delta p$ erhöht wird, wenn die Kenngröße K kleiner null.

4. Verfahren nach einem der Ansprüche 1 oder 3, **dadurch gekennzeichnet, dass** der Befüll-Solldruck $p_{BSoll}$ für den nächsten Zyklus um das Inkrement $\Delta p$ reduziert wird, wenn die Kenngröße K größer null.

5. Verfahren nach einem der Ansprüche 1 bis 4, **dadurch gekennzeichnet, dass** das Inkrement $\Delta p$ zumindest zwischen zwei aufeinander folgenden Zyklen reduziert wird.

6. Verfahren nach Anspruch 5, **dadurch gekennzeichnet, dass** das Inkrement $\Delta p$ reduziert wird, wenn sich das Vorzeichen der Kenngröße K zwischen zwei Zyklen geändert hat.

7. Verfahren nach einem der Ansprüche 1 bis 6, **dadurch gekennzeichnet, dass** die Abbruchbedingung erfüllt ist, wenn das Inkrement $\Delta p$ eine Nichtigkeitsschwelle $\Delta p_{Grenz}$ unterschreitet.

8. Verfahren nach einem der Ansprüche 1 bis 7, **dadurch gekennzeichnet, dass** die Abbruchbedingung erfüllt ist, wenn die Kenngröße K betraglich kleiner ist als ein Nichtigkeitswert $K_{Grenz}$.

9. Verfahren nach einem der Ansprüche 1 bis 8, **dadurch gekennzeichnet, dass** eine Druckdifferenz $p_{Diff}$ zwischen der Druckabschaltschwelle $p_{Ab}$ und dem Befüll-Solldruck $p_{BSoll}$ zwischen 300 und 700 mbar liegt und vorzugsweise für einen Betriebspunkt der Kupplung (1) konstant gehalten wird.

**10.** Verfahren nach Anspruch 9, **dadurch gekennzeichnet, dass** die Druckdifferenz $p_{Diff}$ von der Drehzahl und/oder der Temperatur der Kupplung (1) abhängt und aus einem Kennfeld herausgelesen wird.

**11.** Verfahren nach einem der Ansprüche 1 bis 9, **dadurch gekennzeichnet, dass** ein Startwert für den Befüll-Solldruck ca. 400 bis 1100 mbar oberhalb des Anlage-Solldrucks $p_{ASoll}$ liegt.

**12.** Verfahren nach einem der Ansprüche 1 bis 11, **dadurch gekennzeichnet, dass** die Beaufschlagung des Drucksystems (2) mit dem Befüll-Solldruck $p_{BSoll}$ von einem Druck $p_0$ ausgeht, bei der die Kupplung (1) sicher geöffnet ist.

**13.** Verfahren nach einem der Ansprüche 1 bis 13, **dadurch gekennzeichnet, dass** eine Zeitdifferenz $\Delta t_{3,4}$ zwischen den Zeitpunkten $t_3$ und $t_4$ ca. 30 ms beträgt.

**14.** Verfahren nach einem der Ansprüche 1 bis 14, **dadurch gekennzeichnet, dass** eine Zeitdifferenz $\Delta t_{1,3}$ zwischen den Zeitpunkten $t_1$ und $t_3$ ca. 20 bis 30 ms beträgt.

**15.** Verfahren nach einem der Ansprüche 1 bis 14, **dadurch gekennzeichnet, dass** das Drucksystem (2) ein Steuerventil (6) und einen überlagerten Druckregler umfasst, der einen elektrischen Steuerstrom für das Steuerventil (6) korrigiert.

**16.** Verfahren nach Anspruch 15, **dadurch gekennzeichnet, dass** bei Beaufschlagung des Drucksystems (1) mit dem Befüll-Solldruck $p_{BSoll}$ ein PD-Verhalten beim überlagerten Druckregler eingestellt wird.

**17.** Verfahren nach Anspruch 15 oder 16, **dadurch gekennzeichnet, dass** für wenige Millisekunden, beispielsweise 5 bis 10 Millisekunden, nach den Zeitpunkt $t_1$ der überlagerte Druckregler ausgeschaltet und in einem Zeitpunkt $t_2$ eingeschaltet wird, wobei dann vorzugsweise ein PID-Verhalten eingestellt wird.

**Claims**

**1.** Method for determining a filling pressure for a clutch (1) which has clutch linings (7, 9), a clutch release spring (3) and a hydraulic pressure system (2) in order to close the clutch (1) against the force of the clutch release spring (3), in which the clutch linings (7, 9) bear against one another at an engagement point of the clutch (1) and an increase in the pressure in the pressure system (2) would immediately effect the provision of a torque capacity of the clutch (1), having the following steps:

A applying a desired filling pressure $p_{BSoll}$ to the pressure system (2);
B determining an actual pressure $p_{Ist}$ in the pressure system (2);
C terminating the application of the pressure system (2) with the filling pressure $p_{BSoll}$ when the actual pressure $p_{Ist}$ at a time $t_1$ has reached a pressure switch-off threshold $P_{Aus}$;
D applying to the pressure system (2) a desired bearing pressure $p_{ASoll}$ which allows the engagement point of the clutch (1) to be held;
E determining a characteristic K which indicates whether the actual pressure $p_{Ist}$ is above or below the desired bearing pressure $p_{ASoll}$ after the time $t_1$ between a time $t_3$ and a time $t_4$; and
F repeating a cycle with the steps A to E, the desired filling pressure $p_{BSoll}$ being changed with each repetition by an increment $\Delta p$ until a stop condition is fulfilled; and
G storing the desired filling pressure $p_{BSoll}$ of the last cycle.

**2.** Method according to Claim 1, **characterized in that** the characteristic K corresponds to the integral of the difference between the actual pressure $P_{Ist}$ and the desired bearing pressure $P_{ASoll}$ between the times $t_3$ and $t_4$ in accordance with the following equation:

$$K = \int_{t_3}^{t_4} (p_{Ist} - p_{ASoll}) \cdot dt \,.$$

**3.** Method according to Claim 1 or 2, **characterized in that** the desired filling pressure $p_{BSoll}$ for the next cycle is increased by the increment $\Delta p$ when the characteristic K is less than zero.

**4.** Method according to one of Claims 1 or 3, **characterized in that** the desired filling pressure $p_{BSoll}$ for the next cycle is reduced by the increment $\Delta p$ when the characteristic K is greater than zero.

**5.** Method according to one of Claims 1 to 4, **characterized in that** the increment $\Delta p$ is reduced at least between two successive cycles.

**6.** Method according to Claim 5, **characterized in that** the increment $\Delta p$ is reduced when the sign of the characteristic K has changed between two cycles.

**7.** Method according to one of Claims 1 to 6, **characterized in that** the stop condition is fulfilled when

the increment $\Delta p$ undershoots a negligible threshold $\Delta p_{Grenz}$.

8. Method according to one of Claims 1 to 7, **characterized in that** the stop condition is fulfilled when the characteristic K is less than a negligible value $K_{Grenz}$.

9. Method according to one of Claims 1 to 8, **characterized in that** a pressure difference $p_{Diff}$ between the pressure switch-off threshold $p_{Ab}$ and the desired filling pressure $p_{BSoll}$ is between 300 and 700 mbar and is preferably kept constant for an operating point of the clutch (1).

10. Method according to Claim 9, **characterized in that** the pressure difference $p_{Diff}$ depends on the rotational speed and/or the temperature of the clutch (1), and is read out from a characteristic diagram.

11. Method according to one of Claims 1 to 9, **characterized in that** a starting value for the desired filling pressure is approximately 400 to 1100 mbar above the desired bearing pressure $p_{ASoll}$.

12. Method according to one of Claims 1 to 11, **characterized in that** the application of the desired filling pressure $p_{BSoll}$ to the pressure system (2) starts from a pressure $p_0$ at which the clutch (1) is safely disengaged.

13. Method according to one of Claims 1 to 13, **characterized in that** a time difference $\Delta t_{3,4}$ between the times $t_3$ and $t_4$ is approximately 30 ms.

14. Method according to one of Claims 1 to 14, **characterized in that** a time difference $\Delta t_{1,3}$ between the times $t_1$ and $t_3$ is approximately 20 to 30 ms.

15. Method according to one of Claims 1 to 14, **characterized in that** the pressure system (2) comprises a control valve (6) and a superimposed pressure regulator which corrects an electric control current for the control valve (6).

16. Method according to Claim 15, **characterized in that**, when the desired filling pressure $p_{BSoll}$ is applied to the pressure system (1), a PD action is set for the superimposed pressure regulator.

17. Method according to Claim 15 or 16, **characterized in that** for a few milliseconds, for example 5 to 10 milliseconds, after the time $t_1$ the superimposed pressure regulator is switched off and is switched on at a time $t_2$, a PID action then preferably being set.

## Revendications

1. Procédé pour déterminer une pression de remplissage pour un accouplement (1), lequel présente des garnitures d'accouplement (7, 9), un ressort d'ouverture d'accouplement (3) et un système sous pression hydraulique (2) pour fermer l'accouplement (1) contre la force du ressort d'ouverture d'accouplement (3), les garnitures d'accouplement (7, 9) étant en appui dans un point de préhension de l'accouplement (1) et un accroissement de la pression dans le système sous pression (2) pouvant provoquer immédiatement une mise à disposition d'une capacité de couple de l'accouplement (1),

   comprenant les étapes suivantes :

   A Exposition du système sous pression (2) à une pression de consigne de remplissage $P_{BSoll}$ ;
   B Détermination de la pression réelle $P_{ist}$ dans le système sous pression ;
   C Fin de l'exposition du système sous pression (2) à la pression de remplissage $P_{BSoll}$ lorsque la pression réelle $P_{ist}$, à un instant $t_1$, a atteint un seuil de désactivation de la pression $P_{Aus}$ ;
   D Exposition du système sous pression (2) à une pression de consigne d'application $P_{ASoll}$ par le biais de laquelle le point de préhension de l'accouplement (1) peut être maintenu ;
   E Détermination d'un indice K qui indique si, après l'instant $t_1$, entre un instant $t_3$ et un instant $t_4$, la pression réelle $P_{ist}$ est supérieure ou inférieure à la pression de consigne d'application $P_{ASoll}$ ; et
   F Répétition d'un cycle avec les étapes A à E, la pression de consigne de remplissage $P_{Bsoll}$ étant modifiée d'un incrément $\Delta P$ à chaque répétition jusqu'à ce qu'une condition d'interruption soit remplie ; et
   G Mémorisation de la pression de consigne de remplissage $P_{BSoll}$ du dernier cycle.

2. Procédé selon la revendication 1, **caractérisé en ce que** l'indice K correspond à l'intégrale de la différence entre la pression réelle $P_{ist}$ et la pression de consigne d'application $P_{ASoll}$, entre les instants $t_3$ et $t_4$, conformément à l'équation suivante :

$$K = \int_{t_3}^{t_4} (P_{ist} - P_{ASoll}).dt.$$

3. Procédé selon la revendication 1 ou 2, **caractérisé en ce que** la pression de consigne de remplissage $P_{BSoll}$ est augmentée de l'incrément $\Delta P$ pour le cycle suivant lorsque l'indice K est inférieur à zéro.

4. Procédé selon l'une des revendications 1 ou 3, **ca-**

**ractérisé en ce que** la pression de consigne de remplissage $P_{BSoll}$ est réduite de l'incrément $\Delta P$ pour le cycle suivant lorsque l'indice K est supérieur à zéro.

5. Procédé selon l'une des revendications 1 à 4, **caractérisé en ce que** l'incrément $\Delta P$ est réduit au moins entre deux cycles successifs.

6. Procédé selon la revendication 5, **caractérisé en ce que** l'incrément $\Delta P$ est réduit lorsque le signe de l'indice K a changé entre deux cycles.

7. Procédé selon l'une des revendications 1 à 6, **caractérisé en ce que** la condition d'interruption est remplie lorsque l'incrément $\Delta P$ devient inférieur à un seuil de nullité $\Delta P_{Grenz}$.

8. Procédé selon l'une des revendications 1 à 7, **caractérisé en ce que** la condition d'interruption est remplie lorsque la valeur de l'indice K est inférieure à une valeur de nullité $K_{Grenz}$.

9. Procédé selon l'une des revendications 1 à 8, **caractérisé en ce qu'**une différence de pression $P_{Diff}$ entre le seuil de désactivation de la pression $P_{Aus}$ et la pression de consigne de remplissage $P_{BSoll}$ est comprise entre 300 et 700 mbar et est de préférence maintenue constante pour un point de fonctionnement de l'accouplement (1).

10. Procédé selon la revendication 9, **caractérisé en ce que** la différence de pression $P_{Diff}$ dépend de la vitesse de rotation et/ou de la température de l'accouplement (1) et est lue à partir d'un diagramme caractéristique.

11. Procédé selon l'une des revendications 1 à 9, **caractérisé en ce qu'**une valeur de départ pour la pression de consigne de remplissage est supérieure d'environ 400 à 1100 mbar à la pression de consigne d'application $P_{ASoll}$.

12. Procédé selon l'une des revendications 1 à 11, **caractérisé en ce que** l'exposition du système sous pression (2) à la pression de consigne de remplissage $P_{BSoll}$ commence à une pression $P_0$ à laquelle l'accouplement (1) est ouvert avec certitude.

13. Procédé selon l'une des revendications 1 à 12, **caractérisé en ce que** la différence de temps $\Delta t_{3,4}$ entre les instants $t_3$ et $t_4$ est d'environ 30 ms.

14. Procédé selon l'une des revendications 1 à 13, **caractérisé en ce qu'**une différence de temps $\Delta t_{1,3}$ entre les instants $t_1$ et $t_3$ est d'environ 20 à 30 ms.

15. Procédé selon l'une des revendications 1 à 14, **caractérisé en ce que** le système sous pression (2) comprend une vanne pilote (6) et un régulateur de pression prioritaire qui corrige un courant électrique de commande pour la vanne pilote (6).

16. Procédé selon la revendication 15, **caractérisé en ce que** lors de l'exposition du système sous pression (2) à la pression de consigne de remplissage $P_{BSoll}$, un comportement PD est adopté par le régulateur de pression prioritaire.

17. Procédé selon la revendication 15 ou 16, **caractérisé en ce que** le régulateur de pression prioritaire est désactivé pendant quelques millisecondes, par exemple 5 à 10 millisecondes, après l'instant $t_1$, et est mis en service à un instant $t_2$, un comportement PID étant alors de préférence adopté.

Fig. 1

Fig. 2

EP 1 903 240 B1

Start mit
$p_{BSoll}$ und $\Delta p$

13 — Beaufschlagung
$p_{BSoll}$

14 — Messen $p_{Ist}$

15 — Beaufschlagung
$p_{ASoll}$,
wenn $p_{Ist} = p_{Aus}$

16 — Messen Integral K

17 — Vorzeichenwechsel K? — ja → 18 — $\Delta p$ reduzieren

nein

19 — $\Delta p > \Delta p_{grenz}$ — ja → 20 — K < 0? — ja → 23 — $p_{BSoll}$
um $\Delta p$ reduzieren

nein — 20 — K < 0? — ja → 22 — $p_{BSoll}$
um $\Delta p$ erhöhen

nein

21 — Abspeichern
$p_{BSoll}$

Ende

Fig. 3

Fig. 4

EP 1 903 240 B1